(19) **Europäisches Patentamt**
**European Patent Office**
**Office européen des brevets**

(11) **EP 4 123 480 A1**

(12) **EUROPEAN PATENT APPLICATION**

(43) Date of publication:
**25.01.2023 Bulletin 2023/04**

(51) International Patent Classification (IPC):
**G06F 17/11** (2006.01)   **G06N 10/00** (2022.01)
**G06N 5/00** (2006.01)

(21) Application number: **21382653.0**

(22) Date of filing: **19.07.2021**

(52) Cooperative Patent Classification (CPC):
**G06F 17/11; G06N 5/003**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Quside Technologies S.L.**
**08860 Barcelona (ES)**
• **Fundació Institut de Ciències Fotòniques**
**08860 Castelldefels (Barcelona) (ES)**
• **Institució Catalana De Recerca I Estudis Avançats (ICREA)**
**08010 Barcelona (ES)**

(72) Inventors:
• **BOWLES, Joseph**
**08860 Barcelona (ES)**
• **HUEMBELI, Patrick**
**08860 Barcelona (ES)**
• **ACÍN, Antonio**
**08860 Barcelona (ES)**
• **DAUPHIN, Alexandre**
**08860 Barcelona (ES)**
• **MARTÍNEZ, José Ramón**
**08860 Barcelona (ES)**

(74) Representative: **Grünecker Patent- und Rechtsanwälte**
**PartG mbB**
**Leopoldstraße 4**
**80802 München (DE)**

(54) **COMPUTER-IMPLEMENTED METHOD FOR FINDING AN APPROXIMATE SOLUTION FOR A QUADRATIC UNCONSTRAINED BINARY OPTIMIZATION PROBLEM**

(57)     Computer-implemented method for finding an approximate solution for a quadratic unconstrained binary optimization problem, QUBO problem, the method being performed by a computing system and the method comprising: providing, as input to the computing system, the QUBO problem in a form comprising an Ising Hamiltonian operator, iteratively obtaining a cost function, the cost function depending at least on the Ising Hamiltonian operator, one or more spins $s_i$ and/or the step of the algorithm within each step of the iteration, obtaining, by the computing system, associated intermediate values of the one or more spins $s_i$ using the cost function, obtaining, at the end of the iterative process, by the computing system, final values of the one or more spins $s_i$ that approximately minimize the final iteratively obtained cost function, obtaining, by the computing system, from the final values of the one or more spins $s_i$, an approximate solution for the QUBO problem, wherein the step of obtaining updated intermediate values of the one or more spins $s_i$ is performed using a gradient descent technique or a sequential updating of intermediate values of the one or more spins.

FIG. 1

EP 4 123 480 A1

## Description

The present invention is related to a computer-implemented method for finding an approximate solution for a quadratic unconstrained binary optimization problem, QUBO problem, according to independent claim 1.

## Prior art

Quadratic unconstrained binary optimization problems, also referred to herein as QUBO problems, are known in the field of combinatorial optimization problems. Such problems usually occur, for example, in the fields of finance and economics and also have been applied for example in graph coloring and partition problem solutions.

Solving such problems has been an important issue in the last years. One major issue has been to provide solutions to QUBO problems without having to use quantum computers.

Solving a QUBO problem generally comprises finding a solution vector $\vec{x} = (x_1,x_2,...,x_N)$, that minimizes the function

$$f_q = \sum_{i=1}^{N} \sum_{j=1}^{i} q_{ij}x_i x_j + \sum_{j=1}^{N} h_j x_j. \tag{1}$$

The actual problem is described by the parameters $q_{ij}$ and $h_j$. The values $x_i$ can either be 1 or 0.

It has been found that this problem is closely related to a problem of quantum mechanics, namely finding the ground state (the state with the smallest energy) of the Ising Hamiltonian operator which can be represented as

$$H_z = \sum_{i,j} J_{ij}\sigma_z^{(i)} \sigma_z^{(j)} + \sum_i b_i \sigma_z^{(i)} \tag{2}$$

This is achieved through the map $x_i = (1 + \sigma_z^{(i)})/2.$ Herein, the values $J_{ij}$ denote the interaction between spins at lattice places i and j, $\sigma_z^{(i)}$, $\sigma_z^{(j)}$ denote the z-Pauli matrices acting on a spin at position i and a spin at position j, and $b_i$ denotes a bias term that can, for example, come from an external magnetic field acting on the spins of the system.

The solution to this problem is a vector of spins $\vec{s} = (s_1,s_2,...,s_N)$ that minimizes the expectation value $\langle s|H_z|s\rangle$, where $|s\rangle$ is a quantum state corresponding to the tensor product of the single spin states given by $\vec{s}$. The values of the spins are in that case associated with the classical values $x_i$ via $s_i = 2x_i - 1$ The classical values that solve the QUBO problem are thus related to the direction (either up or down) of the quantum mechanical spins. For solving the QUBO problems in this formulation, different classical approaches have been attempted that use generally available computers. For example, the Fujitsu digital annealer has been discussed to directly obtain the values $x_i$. This annealer thus attempts to find the classical solutions directly, without using the formulation of the QUBO problem according to (2). This annealer, however, does only reasonably support comparably small problems. This is due to the limitation in the size of the cache of the used computer processor (CPU).

Another approach is the Toshiba simulated bifurcation machine which uses graphics processors to accelerate the solving of the problem on the processor. Thereby, solutions can be found faster compared to the Fujitsu digital annealer, though this machine also does only support a limited number of variables, like spins.

Another approach is the D-Wave algorithm. This algorithm, however, has to be performed on a real quantum computer and thus currently suffers from limitations in the number of available qubits. Currently, the D-Wave hardware is only able to support and solve QUBO problems of approximately 200 fully-connected spins while being comparably expensive, compared to a general purpose computer system.

## Problem

In view of the available prior art, the problem addressed by the current invention is to provide a method for solving also large-scale QUBO problems comprised of several thousand or ten thousand variables in comparably short time with commonly available hardware.

**Solution**

This problem is solved by the computer-implemented method for finding an approximate solution for a quadratic unconstrained binary optimization problem, QUBO problem, according to independent claim 1. Preferred embodiments of the invention are provided in the dependent claims.

According to the invention, the computer-implemented method for finding an approximate solution for a quadratic unconstrained binary optimization problem, QUBO problem, the method being performed by a computing system, comprises:

- providing, as input to the computing system, the QUBO problem in a form comprising an Ising Hamiltonian operator,

- iteratively obtaining a cost function, the cost function depending at least on the Ising Hamiltonian operator, one or more spins $s_i$ and/or the step of the algorithm

- within each step of the iteration, obtaining, by the computing system, associated intermediate values of the one or more spins $s_i$ using the cost function,

- obtaining, at the end of the iterative process, by the computing system, final values of the one or more spins $s_i$ that approximately minimize the final iteratively obtained cost function,

- obtaining, by the computing system, from the final values of the one or more spins $s_i$, an approximate solution for the QUBO problem,

wherein the step of obtaining updated intermediate values of the one or more spins $s_i$ is performed using a gradient descent technique or a sequential updating of intermediate values of the one or more spins.

The input of the QUBO problem can either already be in the form of the Ising Hamiltonian or it can at least specify the interaction strengths $J_{ij}$ and the bias terms $b_i$ for all variables, i.e. for the complete problem.

The actual solving of the problem does not necessarily comprise the calculation of quantum mechanical spins. Therefore, in the context of the present invention, at least the intermediate spins $s_i$ and also their final values may depend on other or additional parameters or values, like angles $\theta_i$ or variables $w_i$ (both further explained below) obtained during the iteration that are linked to quantum mechanical spins by a specific transformation.

The cost function is understood to be the expectation value of at least the Ising Hamiltonian operator, but may encompass additional terms that depend on time. The time dependence in this context may be understood to specify a point or step within the iteration. For example, if N iterative steps are performed for solving the QUBO problem or finding its approximate solution, the time t may be denoted as $t = \dfrac{i}{N-1}; \ i \in \mathbb{N};$ $0 \le i \le N - 1$. The cost function may be denoted with C in the following.

It was surprisingly found that, when formulating the QUBO problem in the above way and iteratively obtaining a value of the cost function of a subsequent step depending on the spins $s_i$ (or associated values like $\theta_i$ or $w_i$) obtained in the previous step and potentially also depending on the number of the subsequent step (which may be considered a "time" in the above sense), gradient descent techniques or sequential updating techniques can be applied in a way during the iteration that the problem is solved more efficiently also on general-purpose computers.

It is indeed a finding of the present invention that, surprisingly, with this formulation of the QUBO problem and the specific steps of solving it by a computing system, the gradient descent techniques and sequential updating techniques as are known from the remote technical field of training neural networks can be applied for efficiently finding a solution to the QUBO problem. This specifically pertains to the computing time that is required for finding an approximate solution to the QUBO problem with a given accuracy. When applying the method according to the invention, the computing time required for obtaining the approximate solution to the QUBO problem with a given accuracy is reduced compared to commonly known approaches like simulated bifurcation.

In one embodiment, the step of minimizing the cost function iteratively is performed using a gradient descent technique and the gradient descent technique comprises applying a momentum to the gradient descent.

Adding momentum means that, when updating the variable(s) used for solving the problem in a subsequent step, using the values of the current step (i.e. the intermediate values of the variable(s)), this updating is done by adding, to the values obtained for the vector of variable(s) $\vec{w}$, a "velocity" in the form

$$\vec{v} \leftarrow \mu\vec{v} - \eta\nabla_w C\left(\vec{w},t\right) \qquad\qquad (3)$$

where the momentum $\mu$ is a constant in the range of 0 to 1 and C is the cost function depending on the values $\vec{w}$ which are associated with the spins by a specific transformation and the time t which may, for example, be the time as indicated above.

The new values or variables $\vec{w}$ for the subsequent step for calculating the cost function C are then set to $\vec{w} \leftarrow \vec{w} + v$ and the next iteration starts with these values $\vec{w}$. This is repeated until the end of the iteration, whereby the values $\vec{w}$ determine the approximate solution to the problem.

A specific realization of this general approach can comprise applying the Nesterov Accelerated Gradient technique by setting the values $\vec{w}$ used in calculating the updated velocity $\vec{v}$ in the above sense for the next step as $\vec{w'} = \vec{w} + \mu\vec{v}$ and obtaining the gradient with $\nabla_w C(\vec{w'}, t)$.

This can result in a more efficient minimization of the cost function, thus requiring fewer steps.

In a further embodiment, the step of minimizing the cost function iteratively is performed using a sequential updating of intermediate values of the one or more spins $s_i$, comprising updating, in each iteration, each of intermediate values of the one or more spins $s_i$.

In general, instead of using the variables $\vec{w}$ as indicated above for solving the problem, the problem may be formulated using classical angles $\theta_i$ that are associated with the actual spin values $s_i$ by a specific transformation, where the value of a specific angle theta $\theta_i$ that minimizes the cost function is given by

$$\theta_i^{min} = arctan\left(-\tfrac{t}{1-t}\left(\textstyle\sum_j J_{ij} sin(\theta_j) + b_i\right)\right) \qquad\qquad (4)$$

with the time t being the time for a specific step in the iteration in the above sense. It is seen that the values of the $\theta_i^{min}$ that minimize the cost function at a current point in time (i.e. at a current step in the iterative process) explicitly depend on the time. This can be advantageously used and easily implemented throughout the iterative process. This is done sequentially, meaning the value $\theta_1^{min}$ is calculated using the values of $\theta_i^{min}$ of the previous step. Within the iterative loop, the method then proceeds to calculating $\theta_2^{min}$ already using the newly obtained $\theta_1^{min}$ and so on. This may be repeated within a loop of the iteration until all $\theta_i^{min}$ converge to values that actually minimize the cost function in this iterative step. This may require a single or a plurality of calculations of each of the $\theta_i^{min}$. The obtained final angles $\theta_i^{min}$ of a current step are then used in the subsequent step to calculate the cost function and obtain new values $\theta_i^{min}$. The above exemplary described steps can be applied to the minimization of the cost function using either the herein described gradient descent techniques or the herein described sequential updating techniques.

In a further embodiment, the step of minimizing the cost function iteratively is at least partially carried out on hardware that is designed to perform matrix multiplications. The computer-implemented method according to the above embodiments comprises at least one step that requires a matrix product calculation of the spin values (or values associated with the spins, like $\theta_i^{min}$ or $\vec{w}$) with the interaction strength $J_{ij}$ in the cost function. By employing specifically hardware that is designed to perform such matrix multiplications, like a graphics processing unit, these can be advantageously accelerated, thereby reducing the processing time required for obtaining the approximate solution to the QUBO problem.

Furthermore, when calculating the gradient to obtain the parameter values of the variables in the next step of the iteration, it can also be advantageous to implement this on a graphics processing unit.

In a more specific embodiment, the hardware is or comprises a graphics processing unit and/or field programmable gate arrays.

According to embodiments of the invention, the method is performed without using a quantum computer. This means that the computer-implemented method is carried out on a general-purpose computer and not on a quantum computer. Specifically, it is a finding of the present invention that the computer-implemented method according to the above embodiments can be used to reliably solve QUBO problems in a comparably short time with a high degree of accuracy on a general-purpose computer. This allows for solving the QUBO problem on generally available hardware like personal computers and not requiring cost-intensive hardware like real quantum computers. Furthermore, with the computer-implemented method according to embodiments of the invention, also large-scale QUBO problems can be solved in comparably short times, thereby overcoming the problem of the current limitations of quantum computers.

In a further embodiment, the step of minimizing the cost function iteratively comprises calculating a gradient of the cost function and wherein the calculation of the gradient is performed using the hardware. Employing this hardware in calculating the gradient results in a more efficient (at least with respect to the time required for performing the calculations) calculation of the gradient which is one of the steps in the iterative process that requires most computation.

In a specific embodiment, the Ising Hamiltonian operator $H_z$ can be represented as $H_z =$

$$\sum_{ij} J_{ij} \sigma_z^{(i)} \sigma_z^{(j)} + \sum_i b_i \sigma_z^{(i)}$$ where i and j denote positions of spins i and j and $J_{ij}$ denotes an interaction strength between a spin at position i and a spin at position j and wherein $b_i$ denotes a bias term at position i and $\sigma_z^{(i)}$, $\sigma_z^{(j)}$ denote the z-Pauli matrices acting on a spin at position i and a spin at position j, wherein the QUBO problem can be represented using a position dependent interaction strength $J_{ij}$ and/or a position dependent bias term $b_i$.

The position-dependent interaction means that there are values of the interaction strengths $J_{ij}$ that are different from 0 for different spins i, j. The position dependence of the interaction strength can be a long-range interaction meaning that the interaction strengths $J_{ij}$ are not equal to 0 also for large differences i and j or it can also be of short range meaning that, for example, the interaction strength $J_{ij}$ is only different for 0 for immediately neighboring spins $s_i$ and $s_j$ or for the two next neighbors where the difference of $|i - j| = 1$ or $|i - j| = 2$ or the difference. It is noted that the matrix $J_{ij}$ is a symmetric matrix so that $J_{ij} = J_{ij}$ and its diagonal entries $J_{ii} = 0$ for all i. The position dependence of the bias term $b_i$ means that the bias term $b_i$ may be different for different indices i.

It is a finding of the present invention that the computer-implemented method also results in an efficient solution of the QUBO problem for strongly interacting systems where $J_{ij}$ is not equal to 0 for spins that are acting over a large distance (i.e. also or cases where $|i - j| > 2$.

Specifically, the position-dependence is not trivial in some embodiments.

This means that there is a real position dependence in either the interaction strength $J_{ij}$ so that $J_{ij} \neq J_{kl}$ for $i \neq k$ and/or $j \neq l$ and/or that the position dependence of the bias term $b_i$ is a real position dependence meaning that $b_i \neq b_k$ for at least one pair of i and k where $i \neq k$. Even though the problem becomes more complicated the more complex the interaction strength and/or the position-dependent bias terms actually are (i.e. the more terms $J_{ij} \neq 0$), it is a finding of the present invention that also such rather complex problems can be reliably solved in comparably short time.

In a further embodiment, iteratively obtaining the cost function comprises using an operator that does not commute with the Ising Hamiltonian operator. The operator may be denoted as O.

This means that the commutator $[H_z, 0]_- \neq 0$. An operator that does not commute with the Ising Hamiltonian operator may, for example, be

$$H_x = \sum_i \sigma_x^{(i)} \qquad (5)$$

Here, $\sigma_x^{(i)}$ denotes the Pauli-matrix $\sigma_x$ acting on position i. When obtaining the cost function C as the energy value associated with a time-dependent Hamiltonian operator in the form of

$$H = f(t)H_z - (1 - f(t))H_x \qquad (6)$$

with a time-dependent function f(t) (with the time set for example as already explained above) that fulfills $f(0) = 0$ and $f(t) \in [0,1]$ by

$$C = \langle \theta | H | \theta \rangle, \qquad (7)$$

the iteration of the cost function is done depending on the time t which can be represented as the number of iterative steps of the method. The more the time progresses, the closer the cost function C comes to the Ising Hamiltonian operator that represents the actual QUBO problem. It can specifically be provided that the operator is a Hamiltonian operator.

One specific example of such a Hamiltonian operator was already given above. Using a Hamiltonian operator that does not commute with the Ising Hamiltonian operator allows for a reasonable interpretation of the cost function during the iteration as energy. Moreover, unreasonable or undesirable behavior of the cost function during the iteration due to potential interactions of commuting operators can be avoided, thereby improving the accuracy of the iteration.

In one embodiment, a computing system comprising a processor and memory is provided, wherein the computing system is adapted to execute a computer-implemented method according to any of the above embodiments. With a corresponding computing system, the advantages of the above-described computer-implemented method according to any of the above embodiments can be obtained when solving QUBO problems.

The computing system can further comprise a graphics processing unit and/or field programmable gate arrays.

By using this computing system, also complex matrix products or other calculations can be performed in comparably short time, thereby reducing the time for solving the problem.

In one embodiment, a computer-readable storage medium is provided that comprises (or stores) computer-executable instructions that, when executed by a computing system, cause the computing system to perform a computer-implemented method according to any of the above embodiments.

## Brief description of the drawing

Figure 1     shows a flow diagram of a method according to one embodiment

Figure 2     comparison of the results of simulated bifurcation to a method according to embodiments of the invention

## Detailed description

Before describing the inventive method in detail with respect to the actual steps performed, a more general description of the underlying problem and the mathematical approach using an Ising Hamiltonian will be provided.

Generally, a quadratic unconstrained binary optimization problem, QUBO problem, is a problem that can be formulated as finding the vector $\vec{x} = (x_1, x_2, ..., x_N), x_i \in \{0,1\}$ that minimizes the value

$$\min_{\vec{x} \in \{0,1\}^N} \vec{x}^T Q \vec{x} + \vec{x}^T \vec{a} \tag{8}$$

Herein, Q is a symmetric $N \times N$ matrix with each entry $Q_{ij} \in \mathbb{R}$, $Q_{ii} = 0$ for all elements on the main diagonal and $Q^T = Q$. The vector $a$ is a real $N \times 1$ vector.

By using the transformation $s_i = 2x_i - 1$, this problem can be reformulated so that it can be mapped to finding the energy of the ground state of a Hamiltonian operator known from solid state physics, namely the Ising Hamiltonian operator.

Generally, this Ising Hamiltonian operator is given by

$$H_z = \sum_{ij} J_{ij} \sigma_z^{(i)} \sigma_z^{(j)} + \sum_i b_i \sigma_z^{(i)} \tag{9}$$

Herein, the elements $J_{ij}$ are elements of a $N \times N$ symmetric matrix where $J_{ij} = 0$ for all elements on the main diagonal and $b_i$ are elements of an $N \times 1$ vector with $b_i \in \mathbb{R}$. The matrices $\sigma_z^{(i)}$ are the z-Pauli matrices in the form $\sigma_z^{(i)} = \begin{pmatrix} 1 & 0 \\ 0 & -1 \end{pmatrix}$. The upper index of these matrices indicates on which component of a state $|\psi\rangle = |\psi_1\rangle |\psi_2\rangle ...$

$|\psi_N\rangle$ the Pauli-matrices act as operators. In quantum physics, the particle states $|\psi_i\rangle$ denote the state of a particle at a lattice place i in the lattice that is represented by the Ising Hamiltonian operator and $J_{ij}$ denotes the interaction strength between a particle at lattice place *i* and another particle at lattice place *j*.

The QUBO problem is thus equivalent to finding the ground state $|\psi\rangle$ that minimizes the expectation value of

$$\min_{|\psi\rangle}\langle\psi|H_z|\psi\rangle.$$

the Ising-Hamiltonian operator $H_z$, i.e.

As the Ising Hamiltonian constitutes a problem with only two possible states for each particle with respect to the z-axis of the system, the particle states $|\psi_i\rangle$ are fully described in a normalized form by using the vectors

$$|+\rangle = \frac{1}{\sqrt{2}}\begin{pmatrix}1\\1\end{pmatrix}$$ and $$|-\rangle = \frac{1}{\sqrt{2}}\begin{pmatrix}1\\-1\end{pmatrix}$$ each $|\psi_i\rangle$ can be represented as

$$|\psi_i\rangle = |\theta_i\rangle = cos\frac{\theta_i}{2}|+\rangle + sin\frac{\theta_i}{2}|-\rangle.$$ Here, the values of $\theta_i$ are from the interval $\left[-\frac{\pi}{2}, \frac{\pi}{2}\right].$ It is noted

that the states $|+\rangle$ and $|-\rangle$ are not the Eigen-vectors of the $\sigma_z^{(i)}$ matrices, but of the $\sigma_x^{(i)} = \begin{pmatrix}0 & 1\\1 & 0\end{pmatrix}$ Pauli-matrices.

In this context, the angles $\theta_i$ are considered to be associated with the values of the spins that actually solve the underlying minimization problem of the Ising Hamiltonian operator. Indeed, once all $\theta_i$ are found, all states $|\psi_i\rangle$ are defined.

In some implementations a further transformation can be applied so that

$$\theta_i = \frac{\pi}{2}a(w_i) = \frac{\pi}{2}tanh\frac{w_i}{2} \tag{10}$$

This problem as now formulated is "time independent" meaning that as long as the interaction strength $J_{ij}$ and the bias term $b_i$ is constant, the system will assume a stable state with the minimum energy as calculated above.

The solutions $|\theta_i\rangle$ correspond to solutions of the actual QUBO problem. More specifically, the values for the spins $s_i$ can be obtained via $s_i = sign(\theta_i)$.

A core concept of the present invention is to solve the QUBO problem by obtaining the value for the cost function by using a time-dependent Hamiltonian operator. The time dependence allows for specified iterative steps where each point in "time" corresponds to a different iteration step. For example, the time can be set to run from 0 to 1 and a time-dependent function f(t) can be used that takes values within the interval (0, 1) and at f(0)=0.

According to embodiments of the invention, the time-dependent Hamiltonian operator used for solving the QUBO problem is then given by

$$H(t) = f(t)H_z - (1 - f(t))H_x \tag{11}$$

where the additional Hamiltonian operator $H_x$ is preferably an operator that does not commute with the Ising Hamiltonian operator. In addition to the function f(t), each or at least one of the operators $H_z$ and $H_x$ may be multiplied with a constant $\varepsilon_z$ or $\varepsilon_x$, respectively. The constants may be values larger than 0. This can be used to increase or decrease the relative influence of $H_x$ to the operator H(t).

It has been found that a reasonable approach for addressing QUBO problems can be the Hamiltonian operator

$$H_x = \sum_i \sigma_x^{(i)} \tag{12}$$

The expectation values of this operator $H_x$ using the $$|\theta_i\rangle = cos\frac{\theta_i}{2}|+\rangle + sin\frac{\theta_i}{2}|-\rangle$$ as introduced above are $\langle\theta|H_x|\theta\rangle = \sum_i cos\,\theta_i$. This has advantages because in the first iterative step of t=0, the ground state is the ground state of $H_x$ which can be exactly obtained using the Eigen-vectors of this operator, i.e. the states $|+\rangle$ and $|-\rangle$ mentioned already above. For computational efficiency, however, it has been found by the inventors that the first iterative step should not be initialized with all spin states being |+⟩. This is because this state of the system has a gradient of zero, which will not allow for using the techniques described herein for minimizing the cost function in subsequent iterative steps.

The cost function then corresponds to the energy of the time-dependent Hamiltonian operator as specified in (11) and is given by

$$C(\theta, t) = f(t)\left(\sum_{ij} J_{ij} \sin\theta_i \sin\theta_j + \sum_i b_i \sin\theta_i\right) - (1 - f(t)) \sum_i \cos\theta_i \qquad (13)$$

Using the above further transformation, also $\frac{\pi}{2} a(w_i)$ may be used as the argument instead of $\theta_i$.

With this representation of the cost function which, when minimized, solves the QUBO problem, the method according to the invention can be performed.

It is noted that the actual spin configuration that characterizes the solution to the QUBO problem can be obtained via $s_i = sign(\theta_i) = sign\left(\frac{\pi}{2} a(w_i)\right) = sign(w_i)$ once the final values of the variables are obtained at the end of the iteration. As the QUBO problem is a binary problem where the values solving it either take the value 0 or 1, this can be used to obtain, either in intermediate steps of the inventive method or at the end of the inventive method, the solution to the QUBO problem.

It is a finding of the present invention that formulating the QUBO problem in this specific way allows for applying techniques like gradient descent techniques or sequential updating techniques for obtaining the intermediate values of the spins in an efficient way.

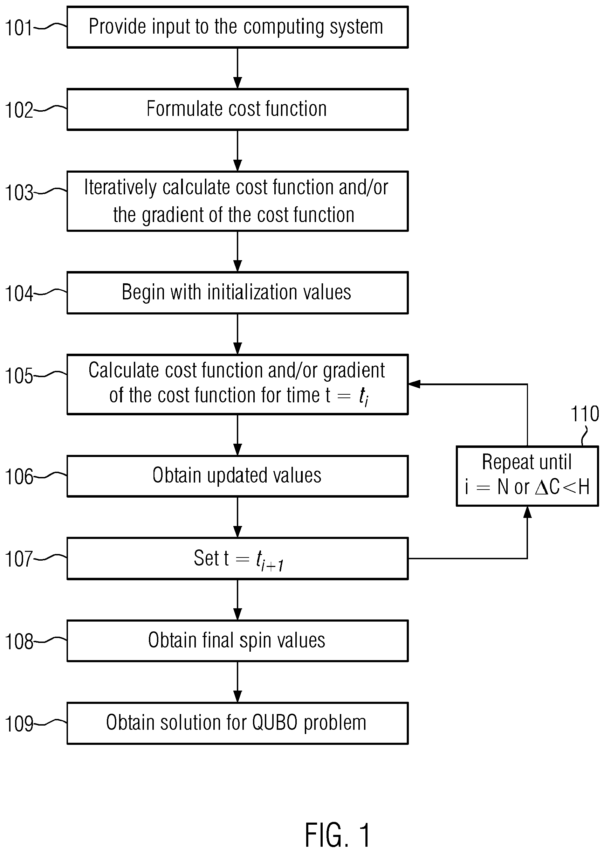

Figure 1 shows a flow chart according to one embodiment of the invention that employs a computer-implemented method for finding an approximate solution for a QUBO problem using the above-described cost function.

The method begins according to the flow diagram shown in figure 1 with a step 101 in which input is provided to the computing system.

This input will generally provide information on the to be (approximately solved) QUBO problem.

Considering the above cost function that is to be processed with the method of figure 1, the input may at least comprise the interaction strength $J_{ij}$ for all i and j and the bias term $b_i$. Moreover, the size of the problem (i.e. the range of the index i) can be provided as input to the computing system. It can, however, also be deduced from the input values $J_{ij}$ and $b_i$ as, for example in the case the interaction strengths $J_{ij}$ are provided in the form of a matrix, the size of the problem is already defined.

Moreover, a number N of iterations may be set that can then be used to determine the time t, for example via $t = \frac{i}{N-1}$ for the counter i beginning with 0. Alternatively, also other initialization values may be used like, for example $t = \frac{i-1}{N}$ if the counter i starts with i=1

Additionally, unless it is preset, the time-dependent function f(t) used in the cost function according to (13) can be provided as part of the input. This is specifically advantageous in case the cost function is not preset. If the time-dependent function f(t) is not a preset function, it can be advantageous to provide this function for example depending on specific characteristics of the problem. While, in one embodiment, a monotonically increasing function $f(t) = t$ can be advantageous, other approaches like $f(t) = t^2$ or $f(t) = t^3$ may also be considered. Also more complex functions like sinus-functions or more complex polynomials may be used. The invention is not limited in this respect as long as the required conditions for f(t) are met, specifically f(0)=0 and preferably f(1)=1. However, at least the condition f(1)=1 is not necessary and f(1) may take any value between 0 and 1.

In other cases where the function f(t) is a preset function, it may be envisaged that more than one function f(t) is available to the computing system. The determination which function to use may either be made by the computing system itself, for example based on the characteristics of the interaction strength $J_{ij}$ and the bias term $b_i$ or the selection of the function f(t) may be made by the user. In this respect, a user interface may be provided where either different functions $f_m(t)$ are presented and/or the different characteristics of the functions $f_m(t)$ can be displayed and the user can decide for a specific function $f_m(t)$. This function can then be used for the further calculations. The characteristics of the functions $f_m(t)$ may provide additional information on the monotonic behavior, for which kind of QUBO problems the specific function is known to perform best or yield the best results in shortest time or the like. This can aid the user in identifying the function $f_m(t)$ which may most appropriately address the QUBO problem he or she attempts to solve.

Alternatively, the function f(t) may be automatically selected by the computing system after having received the input. For example, based on characteristics of the values $J_{ij}$, a specific function $f_m(t)$ can be chosen by the computing system.

Proceeding with step 102, the initial cost function can be formulated. This can, for example, comprise setting, internal to the computing system, the values $J_{ij}$ and the values $b_i$ as well as deriving or obtaining initialization values for the to be calculated values $\theta_i$ or $w_i$, depending on which representation is chosen. While this step 102 is provided outside the actual loop for iteratively calculating the cost function C and thereby minimizing it, this step 102 does not need to be separately provided but can also be part of the first step of the iteration.

The method then proceeds with the beginning of the iterative calculation of the cost function.

This iterative calculation of the cost function begins with a first step 104 in which initialization values of the parameters/variables $\theta_i$ or $w_i$ are used to calculate the cost function $C(\vec{\theta},0)$ or $C(\vec{w}, 0)$.

In order to avoid the cost function to be stuck in a local minimum or otherwise negatively influenced by the initialization variables $\theta_i$ or $w_i$, it can be preferred to set their initialization values randomly in their allowed ranges or all close to 0 or even exactly 0. However, in view of the embodiments of the present invention, the actually chosen initialization values usually do not have a significant impact on the progress of solving the underlying QUBO problem. In some cases, however, it can be advantageous to select initialization values that are derived from the final values for $\theta_i$ or $w_i$ of already solved QUBO problems if these QUBO problems are somehow linked to or somehow similar to the problem to be actually solved. This can result in faster convergence of the method towards the best solution.

As indicated above, the time t may be set to $t = \dfrac{i}{N}$. In the first iteration step, the cost function $C(\vec{\theta},0)$ or $C(\vec{w}, 0)$ for this time $t = 0$ is calculated in step 105. Using the cost function, new values $w_i$ or $\theta_i$ are obtained by using either a gradient decent technique or a sequential updating method. The obtained values may then optionally be used again in the same cost function or the same iterative step so as to minimize the cost function. This procedure may be repeated until the changes in the values of the parameters from one calculation of the cost function to the next calculation of the cost function are below a given threshold and convergence within a single iterative step is obtained. This, however, is not necessary and, according to embodiments of the present disclosure, it is sufficient to obtain values $w_i$ or $\theta_i$ only once per iterative step i. Furthermore, by using the gradient decent technique or the sequential updating, it can, in some embodiments, be sufficient to calculate, in each iterative step, only the gradient of the cost function but not the cost function itself. This can be computationally more efficient.

At the end of the last iterative step, the actual value of the cost function may then be obtained also to obtain the final values of $w_i$ or $\theta_i$.

In any case, at the end of a loop, this results in intermediate values $w_i$ or $\theta_i$ that can be used in the next step of the iteration. These values $w_i$ or $\theta_i$ may be considered to be "intermediate values" of the actual spins and are used for the next step in the iteration.

Obtaining the updated values or intermediate values of the $w_i$ (i.e. when using the above transformation and calculating the cost function depending on the $w_i$ instead of the $\theta_i$) can be done by either a gradient descent technique. This technique is normally used when training neural networks.

It is a finding of the present invention that this technique can also be used advantageously to avoid the iteration (either within a single loop and/or over different loops of the iteration) to be stuck, for example, in local minima of the cost function that are not the global minimum or that are far from the global minimum. Such local minima do not correspond to the actual solution of the underlying QUBO problem and, on the other hand, approaches used for solving the QUBO problem so far kept stuck in such local minima which can result in the solving of the problem failing in the worst case or requiring significant processing time to move out of this local minimum.

The gradient decent technique uses a gradient of the cost function $C(\vec{w}, t)$ to calculate the new values of $\vec{w}$ for the next iterative step and/or for the next loop within the same iterative step.

Specifically, the gradient decent technique updates $\vec{w}$ that is to be used for the next iteration step i+1 (corresponding to $t = \dfrac{i+1}{N}$) or the next loop in the same iterative step using the cost function calculated at time $t = \dfrac{i}{N}$ and the values for $\vec{w}$ of this step. The gradient decent technique can be written in the form of

$$\vec{w} \leftarrow \vec{w} - \eta \nabla_{\vec{w}} C\left(\vec{w}, t\right) \tag{14}$$

where $\nabla_{\vec{w}}$ constitutes the gradient in the coordinates of $\vec{w}$. $\eta$ may be a constant value and may represent a step size.

This results in a simultaneous updating of all parameters $w_i$ in the vector $\vec{w}$. This gradient can be obtained by slightly varying the values $w_i$ in order to obtain a numerical derivative or gradient of the cost function. This is known as the finite difference method. However, it is a finding of the present invention that $\nabla_{\vec{w}}C(\vec{w},t)$ can be obtained directly. Specifically, when deriving $C(\vec{w},t)$ Another way to obtain the gradient is to use the transformation (10) in (13) so as to obtain the gradient

$$\nabla_{\vec{w}}C\left(\vec{w},t\right) = \frac{\pi}{2}\left(f(t)2J\vec{z} + \vec{b}\right) \cdot \vec{x} + \left(\mathbf{1} - f(t)\vec{z}\right) \cdot a'\vec{w} \tag{15}$$

Herein, $\vec{z} = \sin\left(\frac{\pi}{2}a(\vec{w})\right)$ and $\vec{x} = \cos\left(\frac{\pi}{2}a(\vec{w})\right)$, $1 = (1,1,...,1)^T$ and $a'(\vec{w}) = \nabla_{\vec{w}}a(\vec{w})$. The matrix J is the interaction matrix with its corresponding entries $J_{ij}$. This gradient is preferably calculated using a specifically dedicated hardware, preferably a graphics processing unit or field programmable gate arrays.

The obtained gradient is then used to modify the initialization values of the parameters $w_i$ for the next loop within the iteration step and/or modify the values $w_i$ for the next iterative step.

An alternative approach according to embodiments of the invention is the sequential updating of the actual angles $\theta_i$. This approach makes use of the first derivative of the cost function $C(\vec{\theta},t)$ at a fixed point in time for a specific variable $\theta_i$. Considering (13), the variable/parameter $\theta_i$ contributes to the value of the cost function $C(\vec{\theta},t)$ by

$$C(\theta_i,t) = f(t)\left(\sin\theta_i \sum_j J_{ij}\sin\theta_j + b_i\right) - (1 - f(t))\cos\theta_i \tag{16}$$

When deriving $C(\theta,t)$ after $\theta_i$, one obtains $\theta_i^{min}$ that minimizes this function (15) from $\frac{dC(\theta_i,t)}{d\theta_i} = 0$. This has an exact analytical solution and yields

$$\theta_i^{min} = arctan\left(-\frac{f(t)}{1-f(t)}\left(\sum_j J_{ij}\sin\theta_j + b_i\right)\right) \tag{17}$$

These values $\theta_i^{min}$ minimize the cost function of the current step and are therefore used as the values for calculating the cost function in the next step (and/or calculating the values $\theta_i^{min}$ consecutively in the current step) by using the updating $\theta_i \leftarrow \theta_i^{min}$. This approach updates the values $\theta_i$ one after the other. Within a single loop (i.e. within one step of the iteration), this updating can be done several times until the $\theta_i$ converge to the values $\theta_i^{min}$ of the current iterative step at given time t. Furthermore, either additionally or alternatively, the equation (17) can be used to determine the $\theta_i$ that are to be used for the next time step in the iteration.

Both approaches, either the gradient decent technique or the sequential updating technique do require the calculation of matrix products because, as is seen from the above equations, it is always necessary to calculate matrix products comprising the $J_{ij}$ and some function linked to the relevant parameters $\vec{w}$ or $\vec{\theta}$ that depends on the components of the associated vectors.

For that purpose, it can be preferred if the computer-implemented method is preferred on a computing system where at least the matrix products obtained in the step of calculating the cost function and/or updating the parameter values in line with steps 105 and 106 are performed on a specifically dedicated hardware for calculating matrix products, like a graphics processing unit (GPU) or field programmable gate arrays (FPGAs). Other calculations can then still be performed on the central processing unit (CPU) as long as they do not require matrix calculations. More generally, any heterogeneous computing platform comprising a CPU and a GPU or FPGAs or other dedicated hardware for calculating matrix products may be used in this context.

The gradient descent technique as discussed above and as used for obtaining the updated parameter vectors w, respectively, for the further calculation has so far been employed in training of neural networks. It is a finding of the present invention that these techniques can be used in solving QUBO problems specifically when it comes to obtaining the updated values for the $\vec{w}$ vectors and calculating, thereby, the values of the cost function. This is because these techniques allow for optimizing parameters also in landscapes (like the cost function when solving QUBO problems) that comprise one or more local minima.

In the next step 107, the time (and therefore the step of the iteration) is increased to the time $t = \dfrac{i+1}{N}$. The method then resumes to step 105 and calculates the cost function for this new time using the updated values $\vec{w}$ or $\theta_i$ for

$$t = \frac{i+1}{N},$$

the respective parameters from step 106. Within the next loop at time sequential updating or the gradient decent technique as explained above can likewise be used to update the respective parameters/variables $\vec{w}$ or $\theta_i$.

A new value of the cost function is then obtained because not only the new values from step 106 are used to calculate the cost function but the cost function also changes due to the change in the function f(t) as the new argument for the time $t = \dfrac{i+1}{N}$ is used. This will result in a change of the value of the cost function in addition to the changes resulting from the changed parameter values.

The method then again proceeds from the step 105 over step 106 where the updated parameter values $\vec{w}$ or $\theta_i$ are obtained and then proceeds with the step 107, starting the cycle again.

As denoted with the item 110, these iterations can either be repeated until the number of steps i reaches the maximum number N of iterations or, optionally, until an aborting condition is reached. This aborting condition can, for example, comprise that the change of the value of the cost function $C(\vec{\theta}, t_{i+1})$ or $C(\vec{w}, t_{i+1})$, respectively, differs from the value of the cost function in the immediately preceding step by not more than a given amount $\Delta \in \mathbb{R}^+$, so that $0 \leq C(\vec{X}, t_i) - C(\vec{X}, t_{i+1}) \leq \Delta$ and $\vec{X}$ denotes the argument chosen, i.e. either $\vec{\theta}$ or $\vec{w}$. This aborting condition can ensure that the procedure is only aborted if the value of the subsequent step indeed is smaller than the value of the cost function of the preceding step and thus the associated parameter values for $\vec{\theta}$ or $\vec{w}$ constitute a better approximation of the actual solution of the QUBO problem. However, considering the formulation of the QUBO problem using the additional Hamiltonian operator $H_x$ as already explained above, it is more preferred to continue until i=N, i.e. until the last step in the iteration, because, in some embodiments for which f(1)=1, at this point, the cost function is reduced to the cost function of the actual Ising Hamiltonian operator which constitutes the to be solved QUBO problem and the additional operator $H_x$ is not further used in this step. This is because at the point i=N, the function f(t)=1 and, therefore, the additional Hamiltonian operator $H_x$, in this last step, vanishes from the cost function.

The parameter values obtained in this last step when updating them in line with the step 106 are the final solution or the finally approximated solution to the QUBO problem. The method then proceeds to the step 108 (by skipping the step 107 in case i=N) and derives, from the final parameter values $\vec{\theta}$ or $\vec{w}$ obtained, the actual spin values.

This can be done by calculating $s_i = sign(\theta_i) = sign\left(\dfrac{\pi}{2} a(w_i)\right) = sign(w_i),$ depending on which parameter values where chosen to solve the problem, i.e. either $\vec{\theta}$ or $\vec{w}$. This can also be done in each step of the iteration, though explicitly obtaining the values $s_i$ during the iteration can, in some embodiments, also be omitted. Specifically, the intermediate values $\vec{\theta}$ or $\vec{w}$ are connected to the intermediate spins and may thus be considered to be or to correspond or to represent these intermediate spins $s_i$.

These values $s_i$ can then constitute the final solution to the QUBO problem unless additional transformations like $s_i = 2x_i - 1$ have previously been performed in order to formulate the QUBO problem in line with or in a way that complies with the Ising Hamiltonian operator.

Once the final spin values $s_i$ are obtained in step 108, the solution of the QUBO problem is derived in step 109 by applying any potentially necessary transformations.

The steps 108 and 109 can, in this sense, also be considered as a single step that is performed after the reaching of the final time $t = 1$ and can be regarded as a step of obtaining the approximate values that solve the QUBO problem.

As already explained above, there are different ways of finding the intermediate values for the parameters that are used for solving the underlying problem.

In the case of using the gradient descent technique, it may also be preferred to use a method that applies a momentum to the gradient descent technique.

This comprises that, when updating the parameter vector $\vec{w}$, this is updated by $\vec{w} \leftarrow \vec{w} + \vec{v}$, where the velocity $\vec{v}$ is, in itself, updated in each step of the iteration (and/or within each loop within one step of the iteration) by

$$\vec{v} \leftarrow \mu\vec{v} - \eta\nabla_{\vec{w}}C(\vec{w},t) \qquad (18)$$

For the first step in the iteration, the velocity may be set to $\vec{v}$. Apart from the term $\mu\vec{v}$, this corresponds to equation (14). The parameter $\mu \in [0,1]$ can be set depending on the circumstances. It has been found that values for $\mu$ that are close to 1 provide improved results over comparably small values of $\mu$. Preferably, the value $\mu$ may thus be set within a range of $0,9 \leq \mu \leq 1$ or $0,95 \leq \mu \leq 1$. In one embodiment, $\mu = 0,99$.

It is a finding of the present invention that by applying this momentum to the calculation of the updating of the parameter vector $\vec{w}$, shallow local minima can be avoided or the method can at least find a way out of these minima and will thus not be stuck in the same.

A further improvement to this application of momentum is the Nesterov Accelerated Gradient technique. Here, in the argument of the cost function from which the gradient is calculated according to (18) to update the velocity, instead of the above, the argument may be set to $C(\vec{w} + \mu\vec{v},t)$. Instead of the values of $\vec{w}$ of the current iterative step at time t (and/or of the current loop within a single iterative step), some approximation of how these values will be in the next step of the iteration (and/or in the next loop within the same iterative step) is used to calculate the velocity for obtaining the parameter vector $\vec{w}$ for the next step in the iteration (and/or the next loop within the same iterative step).

As already explained above, it is a finding of the present invention that solving QUBO problems can, in view of approaches applied nowadays, result in a "stucking" of the algorithm in local minima that are pseudo-solutions to the QUBO problem but actually are not the global minimum that would constitute the solution to the QUBO problem. It is a finding of the present invention that these issues can be overcome by applying techniques that are so far applied in the context of training neural networks. Even though the described embodiments may, in this respect, not exactly result in the global minimum, they provide comparably better approximate solutions.

In the context of solving QUBO problems, it has been surprisingly found that these techniques allow for finding ways out of local minima and more reliably identifying the actual minimum of the problem (i.e. the global minimum) that then solves the underlying QUBO problem.

With the techniques applied, and when considering hardware implementations of the algorithm by, specifically, implementing steps of the algorithm that involve matrix multiplications on graphics processing units, QUBO problems of almost arbitrary size, at least comprising thousands or several tens of thousands of spins can be reliably solved in acceptable time using commonly available computing systems. Thereby, the need for using quantum computers for solving these problems is overcome at least to some extent, resulting in less cost-intensive hardware being required for solving also large-scale QUBO problems.

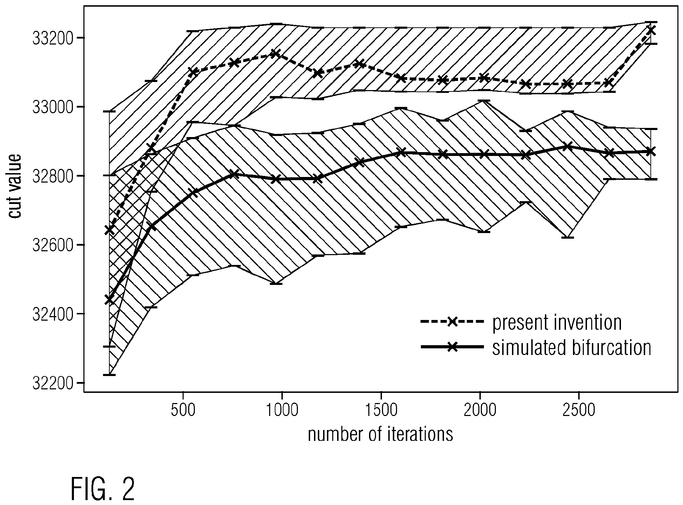

Figure 2 shows the improvement in performance in approximately solving the QUBO problem using a method according to embodiments of the invention (dashed lined) compared to simulated bifurcation as is known from the prior art. The QUBO problem solved by the different methods is the known MAX-CUT optimization problem. For this QUBO problem, higher obtained cut values correspond to a better approximate solution of the problem. As is seen, for the same number of iterations of the algorithm, the obtained maximum value of the cost function by using embodiments of the invention is larger compared to that obtained with simulated bifurcation. Since the two algorithms have similar computations requirements per iteration, this implies that higher values can also be obtained at smaller GPU times. The performance shown in figure 2 was obtained when using the ADAM gradient technique with initial step size and $\eta = 4$, a time function $f(t) = t$ and multiplying the term $H_z$ of the Hamiltonian by a constant 1/70.

In the above description and embodiments, the finding of an approximate solution for the QUBO problem was described. In some embodiments, it can be preferred to implement the computer-implemented method on a specific device like a general purpose computer (or smartphone or laptop or the like) that can be directly accessed by a user. In such a case, for performing a method according to any of the above embodiments, it is preferred that the means for realizing a method for finding an approximate solution for a QUBO problem are, for example, provided by an application that runs on the general purpose computer. It can be even more preferred if the application does not require access to the internet or other connections to devices outside the device on which the application is run. Thereby, users can input information on the QUBO problems they intend to solve and the approximate solution can be obtained without having to rely on remote hardware and/or software. This can be specifically advantageous if the input contains sensitive data.

In other embodiments, the application can be provided at least partially via a cloud architecture as software as a service, SaaS. In that case, a user may access the application via a remote device like a general purpose computer or a smartphone, laptop or tablet or any other suitable device that preferably comprises a display device and means for inputting the necessary input. This input can then be provided to the cloud architecture where an application can be run that finds the approximate solution for the QUBO problem based on the input. This may provide advantages as software and/or hardware resources may be provided depending on the complexity of the QUBO problem that well extend the computational resources of the user hardware, thereby enabling the solution of a complex problem without physical access to the hardware that implements the invention. The required resources may, for example, be determined based on the number of variables or the dimensionality of the QUBO problem to be solved. This, in turn, can be derived from the input.

The embodiments described above may be used to solve physical or chemical problems that can be formulated as QUBO problems and may thus be used for example for physical or chemical simulations. Specifically, solid state systems and their behavior may be analyzed with embodiments of the present invention. Alternatively, constituents for chemical compounds may be identified using one or more of the above embodiments.

Furthermore, one or more of the above embodiments may be used to find approximate solutions for problems regarding financial forecasting, risk assessment or portfolio optimizations, among others. Also, solutions for social problems may be found by using one or more embodiments of the present disclosure.

## Claims

1. Computer-implemented method for finding an approximate solution for a quadratic unconstrained binary optimization problem, QUBO problem, the method being performed by a computing system and the method comprising:

   - providing, as input to the computing system, the QUBO problem in a form comprising an Ising Hamiltonian operator,
   - iteratively obtaining a cost function, the cost function depending at least on the Ising Hamiltonian operator, one or more spins $s_i$ and/or the step of the algorithm
   - within each step of the iteration, obtaining, by the computing system, associated intermediate values of the one or more spins $s_i$ using the cost function,
   - obtaining, at the end of the iterative process, by the computing system, final values of the one or more spins $s_i$ that approximately minimize the final iteratively obtained cost function,
   - obtaining, by the computing system, from the final values of the one or more spins $s_i$, an approximate solution for the QUBO problem,

   wherein the step of obtaining updated intermediate values of the one or more spins $s_i$ is performed using a gradient descent technique or a sequential updating of intermediate values of the one or more spins.

2. Computer-implemented method according to claim 1, wherein the step of minimizing the cost function iteratively is perform using a gradient descent technique and the gradient descent technique comprises applying a momentum to the gradient descent.

3. Computer-implemented method according to claim 1, wherein the step of minimizing the cost function iteratively is performed using a sequential updating of intermediate values of the one or more spins $s_i$, comprising updating, in each iteration, each of intermediate values of the one or more spins $s_i$.

4. Computer-implemented method according to claim 1, wherein the step of minimizing the cost function iteratively is at least partially carried out on hardware that is designed to perform matrix multiplications.

5. Computer-implemented method according to claim 4, wherein the hardware is or comprises a graphics processing unit and/or field programmable gate arrays.

6. Computer-implemented method according to any of claims 1 to 5, wherein the method is performed without using a quantum computer.

7. Computer-implemented method according to claim 4 or 5, wherein the step of minimizing the cost function iteratively comprises calculating a gradient of the cost function and wherein the calculation of the gradient is performed using the hardware.

8. Computer-implemented method according to any of claims 1 to 7, wherein the Ising Hamiltonian operator $H_z$ can be represented as $H_z = \sum_{ij} J_{ij} \sigma_z^{(i)} \sigma_z^{(j)} + \sum_i b_i \sigma_z^{(i)},$ where i and j denote positions of spins i and j and $J_{ij}$ denotes an interaction strength between a spin at position i and a spin at position j and wherein $b_i$ denotes a bias

term at position i and $\sigma_z^{(i)}, \ \sigma_z^{(j)}$ denote the z-Pauli matrices acting on a spin at position i and a spin at position j, wherein the QUBO problem can be represented using a position dependent interaction strength $J_{ij}$ and/or a position dependent bias term $b_i$.

9. Computer-implemented method according to claim 8, wherein the position-dependence is not trivial.

10. Computer-implemented method according to any of claims 1 to 9, wherein iteratively obtaining the cost function comprises using an operator that does not commute with the Ising Hamiltonian operator.

11. Computer-implemented method according to claim 10, wherein the operator is a Hamiltonian operator.

12. Computing system comprising a processor and memory, wherein the computing system is adapted to execute a computer-implemented method according to any of claims 1 to 9.

13. Computing system according to claim 10, further comprising a graphics processing unit and/or field programmable gate arrays.

14. Computer-readable storage medium comprising computer-executable instructions that, when executed by a computing system, cause the computing system to perform a computer-implemented method according to any of claims 1 to 9.

| 101 | Provide input to the computing system |
|---|---|

$\downarrow$

| 102 | Formulate cost function |
|---|---|

$\downarrow$

| 103 | Iteratively calculate cost function and/or the gradient of the cost function |
|---|---|

$\downarrow$

| 104 | Begin with initialization values |
|---|---|

$\downarrow$

| 105 | Calculate cost function and/or gradient of the cost function for time $t = t_i$ |
|---|---|

$\downarrow$

| 106 | Obtain updated values |
|---|---|

$\downarrow$

| 107 | Set $t = t_{i+1}$ |
|---|---|

110

| Repeat until $i = N$ or $\Delta C < H$ |
|---|

$\downarrow$

| 108 | Obtain final spin values |
|---|---|

$\downarrow$

| 109 | Obtain solution for QUBO problem |
|---|---|

FIG. 1

FIG. 2

Europäisches
Patentamt

European
Patent Office

Office européen
des brevets

# EUROPEAN SEARCH REPORT

**Application Number**

EP 21 38 2653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAMEEM ALBASH ET AL: "Comparing relaxation mechanisms in quantum and classical transverse-field annealing", ARXIV.ORG, CORNELL UNIVERSITY LIBRARY, 201 OLIN LIBRARY CORNELL UNIVERSITY ITHACA, NY 14853, 20 January 2021 (2021-01-20), XP081864083, DOI: 10.1103/PHYSREVAPPLIED.15.014029 * Sections II and III.B * | 1-14 | INV. G06F17/11 G06N10/00 G06N5/00 |
| X | King J ET AL: "Quantum Annealing amid Local Ruggedness and Global Frustration", Technical Report, 15 March 2017 (2017-03-15), pages 1-30, XP055877891, Retrieved from the Internet: URL:https://www.dwavesys.com/media/h5qkekos/d-wave_tr_14-1003a-d.pdf [retrieved on 2022-01-11] * sections 2.1, 2.3 and 4 * | 1-14 | |
| X | Smolin John A. ET AL: "Classical signature of quantum annealing", Arxiv.org, 21 May 2013 (2013-05-21), pages 1-8, XP055877651, DOI: 10.3389/fphy.2014.00052 Retrieved from the Internet: URL:https://arxiv.org/pdf/1305.4904.pdf [retrieved on 2022-01-11] * section 4 *  -/-- | 1-14 | TECHNICAL FIELDS SEARCHED (IPC) G06F G06N |

The present search report has been drawn up for all claims

| Place of search | Date of completion of the search | Examiner |
|---|---|---|
| Berlin | 11 January 2022 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

**Application Number**

**EP 21 38 2653**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Bowles Joseph ET AL: "Quadratic Unconstrained Binary Optimisation via Quantum-Inspired Annealing", Arxiv.org preprint repository, 25 October 2021 (2021-10-25), pages 1-8, XP055875995, Retrieved from the Internet: URL:https://arxiv.org/pdf/2108.08064.pdf [retrieved on 2022-01-03] * the whole document * | | |
| A | MALIHEH ARAMON ET AL: "Physics-Inspired Optimization for Quadratic Unconstrained Problems Using a Digital Annealer", ARXIV.ORG, CORNELL UNIVERSITY LIBRARY, 201 OLIN LIBRARY CORNELL UNIVERSITY ITHACA, NY 14853, 22 June 2018 (2018-06-22), XP081200633, DOI: 10.3389/FPHY.2019.00048 * the whole document * | 1-14 | |
| | | | **TECHNICAL FIELDS SEARCHED (IPC)** |

The present search report has been drawn up for all claims

| Place of search | Date of completion of the search | Examiner |
|---|---|---|
| Berlin | 11 January 2022 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)